Europäisches Patentamt

European Patent Office

Office européen des brevets

(11) Veröffentlichungsnummer: **0 074 422**
**B1**

(12) # EUROPÄISCHE PATENTSCHRIFT

(45) Veröffentlichungstag der Patentschrift:
**03.07.85**

(51) Int. Cl.⁴: **G 03 F 5/00, G 03 F 1/00, H 04 N 1/00, G 03 G 13/26**

(21) Anmeldenummer: **81107207.3**

(22) Anmeldetag: **12.09.81**

(54) Verfahren zur Herstellung von Druckformen mittels unregelmässig verteilter Druckpunkte.

(43) Veröffentlichungstag der Anmeldung:
**23.03.83 Patentblatt 83/12**

(45) Bekanntmachung des Hinweises auf die Patenterteilung:
**03.07.85 Patentblatt 85/27**

(84) Benannte Vertragsstaaten:
**AT BE CH DE FR GB IT LI NL SE**

(56) Entgegenhaltungen:
**EP - A - 0 032 908**
**DE - A - 3 005 775**
**DE - B - 1 269 157**
**GB - A - 2 043 392**

(73) Patentinhaber: **DR.-ING. RUDOLF HELL GmbH, Grenzstrasse 1-5, D-2300 Kiel 14 (DE)**

(72) Erfinder: **Scheuter, Karl R., Prof. Dr., Schillerstrasse 9, D-6100 Darmstadt 13 (DE)**
Erfinder: **Fischer, Gerhard, Dipl.-Ing., Mainstrasse 19, D-6050 Offenbach (DE)**

## Beschreibung

Die vorliegende Erfindung betrifft ein Verfahren zur Herstellung von Druckformen mittels unregelmässig verteilter Druckpunkte, bei dem ein Bildoriginal bzw. ein entsprechend der Rechnerkapazität verarbeitbarer Ausschnitt des Originalbildes mit der gewünschten Detailauflösung in einzelnen Flächenelementen optoelektronisch abgetastet wird, wobei jedem Flächenelement ein dem Abtastsignal entsprechender Tonwert zugeordnet wird und Flächenelemente gleichen oder etwa gleichen Tonwertes zu Teilflächen zusammengefasst werden und die einzelnen Teilflächen ihrem Tonwert entsprechend durch eine Anzahl statistisch verteilter Druckpunkte, deren gesamte Flächenbedeckung innerhalb der Teilfläche dem Tonwert der Teilfläche entspricht, wiedergegeben werden.

Es ist bereits aus der älteren internationalen Patentanmeldung PCT/DE Nr. 80/00110 veröffentlicht am 19.2.81 (entspricht EP-A Nr. 1-32908) ein Verfahren zur Herstellung von Druckformen bekannt, bei dem mittels eines Zufallsgenerators eine statistische oder quasistatistische (stochastische) tonwertabhängige Verteilung von kleinsten noch druckbaren Punkten auf der Aufzeichnungsseite vorgenommen wird. Dieses Verfahren arbeitet nach folgenden Schritten.

Optischelektrische Abtastung der Vorlage nach Bezugsflächen in einzelne Flächenelemente, deren Grösse durch die in der Reproduktion gewünschte Detailauflösung bestimmt ist, z. B. 100 × 100 µm², wobei z. B . 6 × 6 Flächenelemente eine Bezugsfläche bilden, welcher ein Aufzeichnungsbereich entspricht, in dem z.B. 12 × 12 kleinste noch druckbare Punkte der Grösse 50 × 50 µm² reproduzierbar sind.

Vergleich der bei der Abtastung gewonnenen Dichtewerte innerhalb jeder Bezugsfläche.

Zusammenfassung von Flächenelementen nahezu gleicher Dichte zu Flächenstücken jeweils einer gemeinsamen mittleren Dichte.

Kennzeichnung der dem jeweiligen Dichtewert entsprechenden Anzahl von kleinsten noch druckbaren Punkten innerhalb jedes Flächenstückes, wobei die Positionen dieser Punkte in einer Druckmatrix, welche zur Steuerung der Aufzeichnung dient, durch einen Zufallsprozess bestimmt werden.

Aufzeichnung gemäss der in der Matrix gespeicherten Daten in bekannter Weise mittels in der Scanner-Technik üblichen Aufzeichnungseinrichtungen, z. B. einer Belichtungseinheit gemäss DE-B Nr. 2107738 (entspricht US-A Nr. 3725574).

Bei diesem Verfahren entspricht auf der Abtastseite eine Bezugsfläche, die in kleineren Flächenelementen abgetastet wird, der Grösse der Druckmatrix.

Es hat sich gezeigt, dass Flächenelemente etwa gleichen Tonwertes in der Praxis gelegentlich über die Bezugsfläche und damit auch über die Grösse der Druckmatrix hinaustragen, wodurch bei der Aufzeichnung eine solche Fläche in gleichgrosse Rechtecke der Quadrate unterteilt wird. Dadurch entsteht entweder ein übergeordneter Raster von der Grösse der Bezugsfläche bzw. Druckmatrix, was eventuell zu periodischen Wiederholungen der Anordnung der druckenden Punkte führen kann, oder die Druckmatrix muss so gross gewählt werden, dass eine periodische Wiederholung innerhalb einer Vorlage nicht zu erwarten ist.

Der Erfindung liegt daher die Aufgabe zugrunde, diese periodischen Wiederholungen mit einfacheren Mitteln auszuschliessen.

Diese Aufgabe wird dadurch gelöst, dass ein Konturensignal erzeugt wird, aufgrunddessen die Zusammenfassung der Teilflächen entsprechend den tatsächlichen Grenzen gleichen oder etwa gleichen Tonwertes innerhalb des Originalbildes bzw. eines entsprechend der Rechnerkapazität verarbeitbaren Ausschnitts des Originalbildes vorgenommen wird. Eine vorteilhafte Weiterbildung besteht darin, dass die Ermittlung der Flächen gleichen oder etwa gleichen Tonwertes durch eine messtechnische Konturenerkennung vorgenommen wird. Diese Konturenerkennung wird in vorteilhafter Weise durch einen Vergleich der Abtastsignale bzw. der daraus ermittelten Tonwerte der einzelnen Flächenelemente vorgenommen, indem bei gleichem oder etwa gleichem Tonwert die Flächenelemente zu Teilflächen zusammengefasst werden. Eine weitere vorteilhafte Möglichkeit der Ermittlung der Flächen gleichen oder etwa gleichen Tonwertes besteht darin, dass die Zusammenfassung der Flächenelemente mittels eines Konturensignals vorgenommen wird, indem alle Flächenelemente, die in Abtastrichtung innerhalb zweier Konturlinien liegen, die benachbarten Dichtewerte entsprechen, zusammengefasst werden.

Weiterhin ist in vorteilhafter Weise vorgesehen, dass bei der Wiederaufzeichnung der Teilflächen einzelne Elemente der Teilflächen unterdrückt werden.

Die Erfindung wird im folgenden anhand der Fig. 1-6 näher dargestellt. Es zeigen:

Fig. 1 die schematische Darstellung einer Einrichtung zur Durchführung des Verfahrens,

Fig. 2a und 2b ein Ablaufschema zur Ermittlung der Verteilung der Druckpunkte,

Fig. 3 die grafische Darstellung eines Ausführungsbeispiels, in welchem die Druckmatrix eines Flächenstücks gemäss dem Ablaufschema nach Fig. 2a und 2b dargestellt ist,

Fig. 4 die Zusammenstellung von Zwischenergebnissen einzelner Verarbeitungsschritte bei der Ermittlung der Positionen der Druckpunkte gemäss der Fig. 2a und 2b,

Fig. 5a und 5b Anordnungen zur Erzeugung eines Kontursignals mittels einer optischen Umfeldabtastung 5a bzw. mittels eines Analogrechners 5b,

Fig. 6 eine Anordnung zur Erzeugung von Zufallszahlen.

*Bester Weg zur Ausübung der Erfindung*

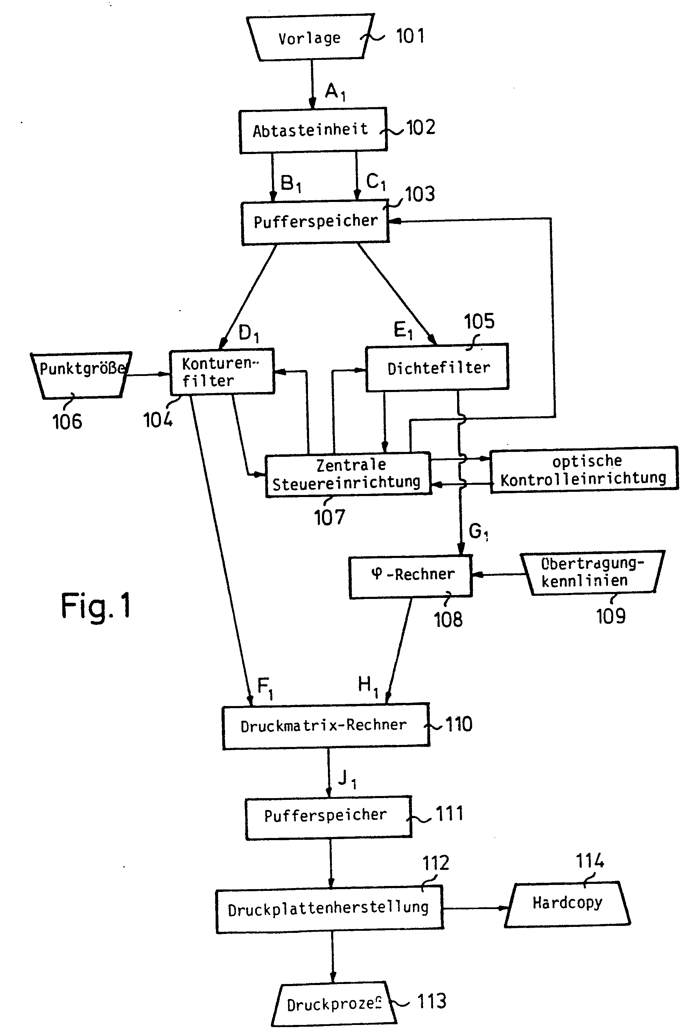

In Fig. 1 wird eine Vorlage 101 entsprechend der gewünschten Detailauflösung mit einer Abtasteinheit 102 abgetastet. Für die Abtasteinheit 102 können Scanner zur Anwendung kommen, bei denen das von der Originalvorlage reflektierte oder durchgelassene Licht $A_1$ entsprechend den Teilfarben aufgeteilt wird, z. B. Scanner-Typ DC 350, Hersteller Dr.-Ing. Rudolf Hell GmbH, Kiel, BRD. Die den Farbauszügen zugeordneten Lichtanteile werden dabei jeweils einem Farbrechner zugeführt und dort verarbeitet. Meistens schliessen sich noch Korrekturrechner an, welche teils automatisch, teils von Hand steuerbar einen Einfluss auf das Ausgangssignal des Farbrechners gestatten.

Farb- und Korrekturrechner erzeugen analoge oder digitale Signale $B_1$, die jeweils dem korrigierten Dichtewert, d. h. der gewünschten Graustufe m entsprechen. Selbstverständlich können bei solchen Abtasteinheiten in bekannte Weise (siehe z. B. DP-PS Nr. 2107738) mehrere parallel arbeitende Abtastköpfe, die eine Mehrspurabtastung mit der gewünschten Detailauflösung vornehmen, vorgesehen sein, um eine schnellere Abtastung zu erhalten als mit nur einem Abtastkopf.

Die Abtasteinheiten können auch in bekannter Weise von einem Rechner, z. B. Rechnertyp R 10 der Siemens AG, BRD, gesteuert sein, welcher die Aufnahme der Signale und ihre Übergabe an einen Speicher oder eine Rechneranlage koordiniert, wie dies z. B. bei dem auf dem Markt befindlichen System Chromacom der Dr.-Ing. Rudolf Hell GmbH, Kiel, BRD, der Fall ist.

Die Abtasteinheit kann ausser dem der Graustufe m entsprechenden Dichtesignal $B_1$ auch bereits ein Kontursignal $C_1$ erzeugen. Um im folgenden Zwischenspeicher 103 nicht allzuviel Speicherplatz zu benötigen, kann jedoch auf die Aufnahme und Aufzeichnung des Kontursignals verzichtet werden. In diesem Falle müssen die Konturen später mit mathematischen Methoden durch Graustufenvergleiche ermittelt werden.

Die bekannten Möglichkeiten zur Ermittlung von Konturen werden weiter unten noch aufgeführt. Es kann weiterhin vorteilhaft sein, auf die Dichtewerte des Delta-Modulationsverfahrens anzuwenden, bei dem statt der tatsächlichen Dichtewerte die Dichteänderungen übertragen werden.

Für die erfindungsgemässe Einrichtung ist lediglich die Voraussetzung nötig, dass überhaupt ein Konturensignal und ein Dichtesignal erzeugt werden, welches messtechnisch erkannt oder berechnet wird.

Aus der Abtasteinheit 102 gelangt das Dichtesignal $B_1$ und gegebenenfalls das Kontursignal $C_1$ in einen Pufferspeicher 103. Dieser speichert die bei der Abtastung des Originalbildes gewonnenen Daten. Seine Speicherkapazität richtet sich nach der gewünschten Detailauflösung und der Grösse des Originalbildes. In der Praxis werden für solche Zwecke derzeit Plattenspeicher eingesetzt (z. B. wie im System Chromacom der Dr.-Ing. Rudolf Hell GmbH, Kiel, BRD), z. B. eine Platte je Teilfläche, so dass die bei der Abtastung gewonnenen Daten durch anschliessende Rechner und Filter verändert oder durch sonstige, z. B. aus anderen Originalbildern gewonnene Daten ersetzt werden können. Häufig enthalten solche Plattenspeicher bereits einen eigenen Rechner und bilden somit ein selbständiges Teilsystem, z. B. Plattenlaufwerk der Siemens AG, BRD, System 3948 B.

Der Pufferspeicher 103 ist weiterhin mit einem Konturenfilter 104 und einem Dichtefilter 105 verbunden, welche die bei der Abtastung gewonnenen Signale so verarbeiten, dass ein vom Aufnahme-Rauschen befreiter Datensatz entsteht. Dies kann in bekannter Weise geschehen, indem Flächenstücke gleichen oder etwa gleicchen Tonwertes zusammengefasst werden und ihr mittlerer Tonwert berechnet wird. Es ist ausserdem vorteilhaft, die Druckbedingungen des verwendeten Druckverfahrens bei der Aufbereitung der Abtastsignale für den Druckprozess mit einzubeziehen, z. B. indem im Kontursignal bereits die Fläche der druckenden Punkte berücksichtigt wird. So kann man eine Eingabemöglichkeit 106 für die Punktgrösse vorsehen und die Ränder der Flächenstükke gegebenenfalls glätten, so dass das Ausgangssignal $F_1$ des Konturenfilters 104 bereits den Konturen der Reproduktion entspricht, welche dadurch bis auf die Digitalisierung — gegeben durch die Fläche der druckenden Punkte — mit den Konturen der Vorlage übereinstimmen können. Weiterhin hat es sich in der Praxis bewährt, eine zentrale Steuereinrichtung 107 vorzusehen, die den Datenaustausch des Zwischenspeichers 103 mit dem Konturenfilter 104 und dem Dichtefilter 105 steuert, und eine optische Kontrolleinrichtung, z. B. ein Sichtterminal, enthält. Pufferspeicher, Konturen- und Dichtefilter und zentrale Steuereinrichtung können in vorteilhafter und bekannter Weise eine Einheit bilden, z. B. das o. a. System Chromacom der Dr.-Ing. Rudolf Hell GmbH, Kiel, BRD, in welches auch die sich anschliessenden -Rechner 108, Druckmatrix-Rechner 110 und Pufferspeicher 111 in vorteilhafter Weise mit einbezogen werden können. Die Aufgaben von Konturen- und Dichtefilter sowie von -Rechner und Druckmatrixrechner können insbesondere auch durch Rechenprogramme ausgeführt werden. Rechenprogramme zur Konturfindung und Dichtefilterung sind aus der Literatur zur digitalen Bildverarbeitung in grosser Anzahl bekannt (siehe z. B. Angewandte Szenenanalyse, DAGM Symposium, Karlsruhe, 10-12.10.1979, Springer-Verlag, Berlin-Heidelberg-New York 1979). Daher ist prinzipiell eine Rechenanlage, die über die nötigen Speicher (103 und 111) verfügt bzw. diese ansteuern kann, die entsprechende Rechenprogramme verarbeiten kann und von einem Kontrollterminal aus steuerbar ist (z. B. Type R 30 der Siemens AG, BRD) dazu geeignet, die o. a. diskreten Baugruppen zu ersetzen.

Das Ausgangssignal $G_1$ des Dichtefilters 105 wird einem $\varphi$-Rechner 108 zugeführt, der die Flächendeckungsgrade $H_1$ der einzelnen Flächenstücke gleichen oder etwa gleichen Tonwertes aus den Dichtesignalen berechnet, wobei in vorteilhafter Weise eine Eingabemöglichkeit 109 für die im folgenden Reproduktionsprozess zu berücksichtigenden Übertragungskennlinien, z. B. die Plattenkopier- und die Druckkennlinie, vorgese-

hen ist. Der $\varphi$-Rechner kann in bekannter Weise mit Hilfe eines Speichers realisiert werden, aus welchem der dem Dichtesignal zugehörige $\varphi$-Wert bzw. der Flächendeckungsgrad $H_1$ abgerufen wird, und einen Rechner enthalten, um z. B. aus einzelnen gespeicherten Kennlinienpunkten eine linearisierte Kennlinie zu berechnen. Der $\varphi$-Rechner kann in vorteilhafter Weise durch ein Rechenprogramm ersetzt werden, welches entweder durch Zuordnung in einer Matrix oder durch einen oder mehrere Näherungsalgorithmen (z. B. polynomischer Ausdruck) denjenigen $\varphi$-Wert bzw. den Flächendeckungsgrad $H_1$ bestimmt, der der gewünschten bzw. der berechneten Dichtestufe entspricht.

Die erfindungsgemässe Einrichtung erzeugt aus den Signalen für Kontur $F_1$ und Flächendeckungsgrad $H_1$ in einem Druckmatrixrechner 110 in Signal $J_1$, welches die Positionen der druckenden Punkte angibt. Dies wird später ausführlich beschrieben.

Der Druckmatrixrechner 110 ist mit einem Pufferspeicher 111 verbunden, wodurch die Druckplattenherstellung 112 mit dem daran anschliessenden Druckprozess 113 und einer Hardcopyausgabe 114 zur Proof-Herstellung auf einfache Weise von der Bearbeitung der Vorlage getrennt werden kann.

Der Pufferspeicher 111 kann z. B. wiederum ein Plattenspeicher sein. Seine Grösse ist abhängig von der Fläche der Reproduktion und der Fläche der druckenden Punkte. Ist die Kantenlänge eines quadratischen, druckenden Punktes z. B. 25 μm und die Fläche der Reproduktion z. B. 17 cm × 25 cm, dann muss entsprechend für 68 000 000 quadratische Punkte die Information gespeichert werden, ob der entsprechende Punkt gedruckt oder farbfrei sein soll. Die nötige Speicherkapazität ist also in diesem Fall 68 Mbit für jede Teilfarbe.

Die Druckplattenherstellung 112 kann z. B. erfolgen, indem in bekannter Weise, z. B. mit einem Scanner, die im Pufferspeicher aufgezeichneten Daten auf einen Film belichtet werden, von wo sie anschliessend auf die Auflagendruckplatte kopiert werden.

Die Druckplattenherstellung kann in vorteilhafter Weise auch durch direkte Übertragung der im Pufferspeicher aufgezeichneten Daten auf einen Tiefdruckzylinder (autotypischer Tiefdruck) oder auf eine Druckplatte erfolgen.

Vom Film kann zuvor in bekannter Weise eine Hardcopy erstellt werden (z. B. Cromalin-Verfahren der Fa. Dupont de Nemours, Orsay, Frankreich) oder ein Ausdruck mit Hilfe einer Druckplatte (Andruck).

Eine Hardcopy kann auch direkt aus dem Pufferspeicher erzeugt werden, z. B. durch Ink-Jet oder Thermo-Druck.

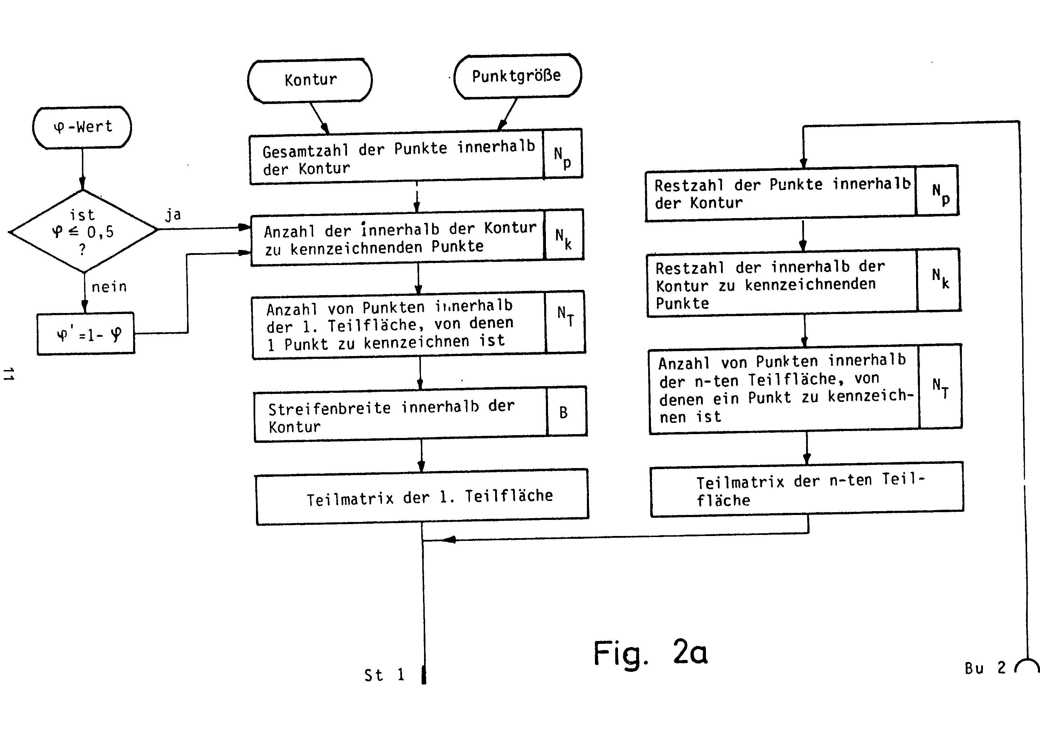

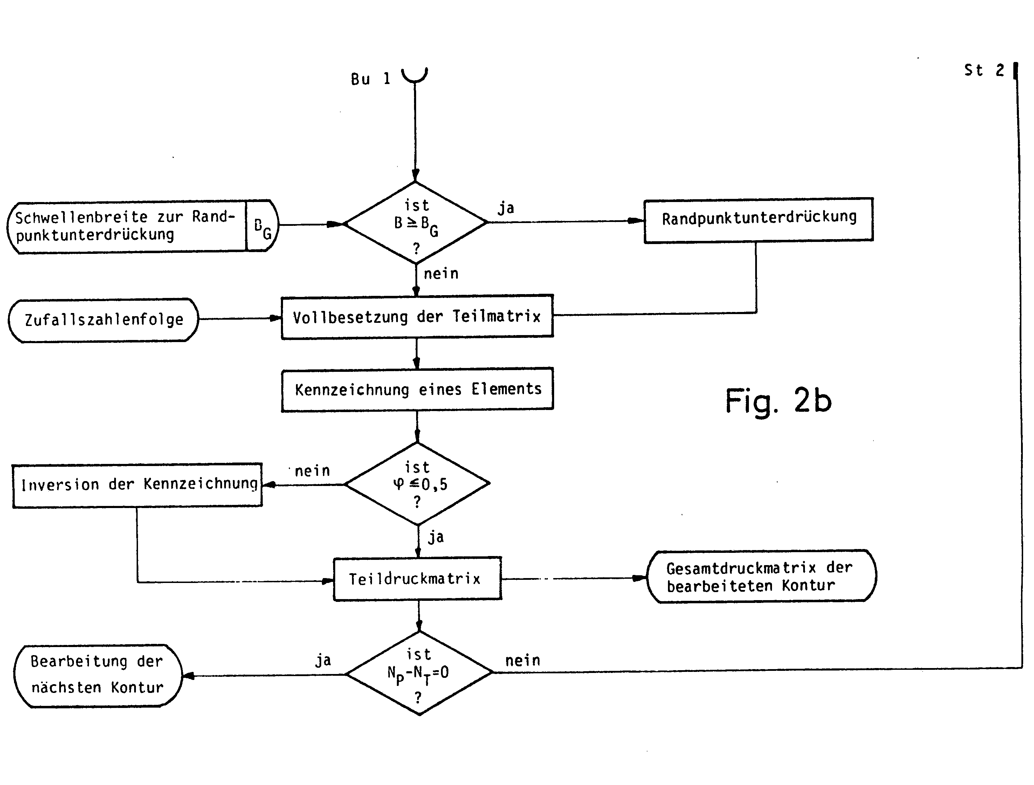

In den Fig. 2a und 2b ist ein Ablaufschema zur Ermittelung der Verteilung der Druckpunkte dargestellt, womit ein beispielhaftes Verarbeitungsschema des Druckmatrixrechners 110 in Fig. 1 bzw. der Programmablaufplan des ihn substituierenden Rechenprogrammes angegeben wird.

Aus dem Ausgangssignal $F_1$ des Konturenfilters 104 (Fig. 1) wird zunächst die Zahl $N_p$ der innerhalb der Kontur druckbaren Punkte bestimmt, was z. B. aus dem aufzeichnungsseitigen Rasterkleinster noch druckbarer Punkte und aus den Grenzen der Flächenstücke gleichen Tonwertes durch Abzählen der innerhalb jeder Kontur liegenden Rasterelemente erfolgen kann (z. B. $N_p = 860$). Der Flächendeckungsgrad $H_1$ besagt, wieviele der innerhalb der Kontur liegenden Rasterelemente bedruckt werden sollen. Um eine möglichst schnelle Verarbeitung zu gewährleisten, wird zunächst geprüft, ob es günstiger ist, die Positionen der druckenden Punkte oder die der nicht druckenden Punkte zu bestimmen. Falls z. B. 3,85% der 860 innerhalb der Kontur druckbaren Punkte druckende Punkte sind, ist es günstiger, deren Positionen zu bestimmen, während es demgegenüber günstiger ist, die Positionen der nicht druckenden Punkte zu bestimmen, wenn z. B. 96,15% der druckbaren Punkte druckende Punkte sind. In beiden Fällen ist die gleiche Anzahl von Punkten $N_k$ zu kennzeichnen, nämlich $860 : 3,85 = 860 : (100\% - 96,15\%) = 33$ Punkte. Die Grenze ist also bei 50% erreicht.

Um diese 33 Punkte innerhalb der 860 möglichen Positionen relativ gleichmässig zu verteilen, unterteilt man zweckmässig die Gesamtfläche, d. h. die von der Kontur eingerahmte Fläche in 33 etwa gleichgrosse Teilflächen, die dann $N_T$-Elemente aufweisen. So bleiben z. B. für die

1. Teilfläche $N_{T1}$ = 26 Punkte aus $860 : 33 = 26,061$ und für die

2. Teilfläche $N_{T2}$ = 26 Punkte aus $834 : 32 = 26,063$ und für die

3. Teilfläche $N_{T3} = 26$ Punkte aus $808 : 31 = 26,065$, schliesslich für die

33. Teilfläche $N_{T33}$ = 26 Punkte aus $26 : 1 = 26,000$,

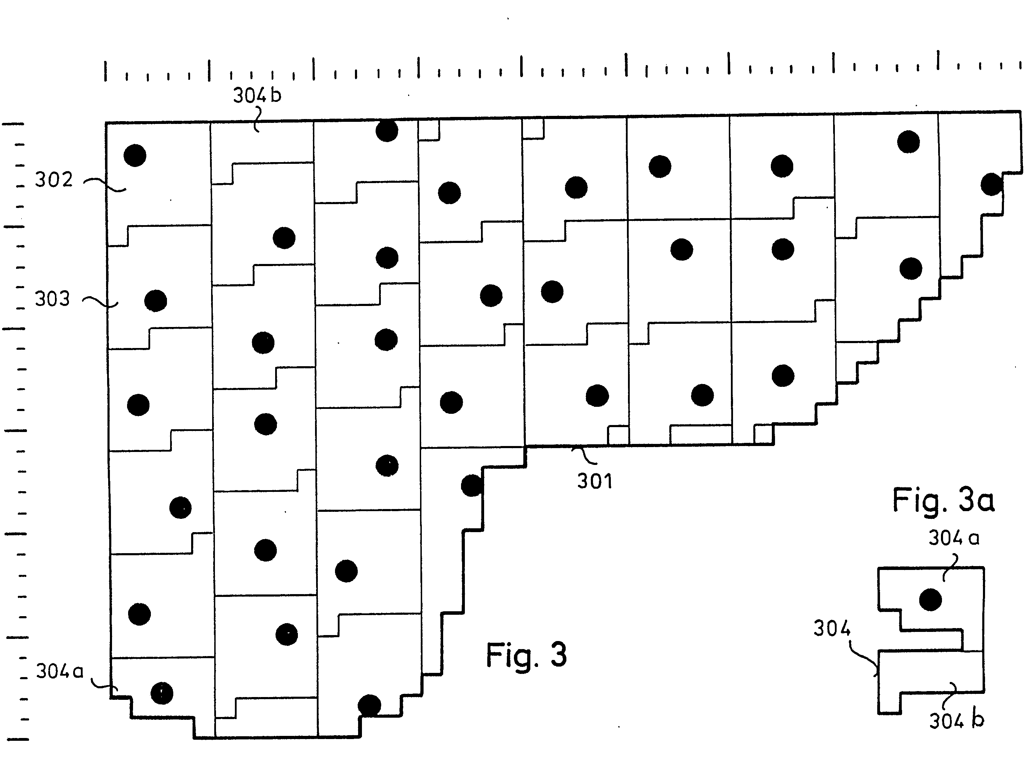

von denen jeweils ein Punkt zu kennzeichnen ist. Ausserdem ist es vorteilhaft, den einzelnen Teilflächen etwa die gleiche Form zu geben, z. B. näherungsweise quadratisch. Dies kann dadurch erreicht werden, dass man die Kontur in einzelne Streifen der Breite B zerlegt, was später anhand von Fig. 3 näher erläutert wird. Die Streifenbreite B ist z. B. aus der Zahl $N_Z$ der innerhalb einer Teilfläche liegenden Punkte bestimmbar

$$B = 5 \text{ aus } \sqrt{26} = 5,099$$

Das Ausgangssignal $F_1$ des Konturenfilters 104 in Fig. 1 kann eine binäre Matrix sein, wobei z. B. die innerhalb der Kontur liegenden Punkte mit L, die übrigen mit O gekennzeichnet sind. Aus dieser können Teilmatrizen erzeugt werden, wobei also die Streifenbreite B berücksichtigt wird, indem alle Teilmatrizen z. B. 5 Spalten haben und die Anzahl ihrer Zeilen aus der Kontur abgeleitet wird, z. B. durch Abzählen von $N_{Ti}$ Elementen mit L für die i-te Teilfläche.

Den im o. a. Beispiel 26 Elementen der ersten Teilfläche können nun z. B. 26 verschiedene Zufallszahlen zugeordnet werden, welche z. B. aus einem Speicher abgerufen werden können, so dass eine Zufallsmatrix entsteht, und die Auswahl eines Elementes kann z. B. dadurch erfolgen, dass das Element mit dem höchsten Zahlenwert gesucht wird. Dieses ausgewählte Element entspricht im gewählten Beispiel einem druckenden Punkt. Die Zufallszahlen müssen nicht wirklich verschieden sein, da man auch dasjenige Element auswählen kann, welchem keines mit einem höheren Zahlenwert folgt, d. h. das erste, falls zufällig die gleiche Zahl zweimal auftritt.

Man kann auch das Element mit dem niedrigsten Zahlenwert oder das am dichtesten bei einem vorgegebenen Zahlenwert liegende suchen. Man kann auch einzelnen Elementen einer Teilfläche keine Zufallszahl und z. B. stattdessen die Zahl 0 zuordnen, d. h. es wird dort kein Punkt gedruckt, um die Wiedergabe von Konturen zu verbessern oder um Punktanhäufungen an den Kanten oder Ecken der Teilflächen zu verhindern. Hierzu bieten sich verschiedene Verfahren an. Ein sehr einfaches ist z. B. der Vergleich mit einer Schwellenbreite $B_G$. Ist die Streifennbreite B grösser als $B_G$, so kann man die entsprechenden Elemente untedrücken, d. h. ihnen die Zahl 0 zuordnen, z. B. in jeder Zeile das 1. und 5. Element, falls $B_G = 3$ war. Dasselbe Verfahren kann man auch auf die Spalten anwenden, so dass sich sehr viele Möglichkeiten eröffnen. Ebenso kann eine Randpunktunterdrückung für die Gesamtkontur, die also z. B. jedem am Rand der Fläche liegenden Element den Zahlenwert 0 zuordnet, vorgesehen sein, um eine Konturverwischung sicher auszuschliessen.

Die Auswahl jeweils eines Elementes aus den Elementen einer Teilfläche kann für alle Teilflächen nach demselben Schema erfolgen, sie kann aber auch unter verschiedenen Schemata variiert werden. Nach Bearbeitung einer Teilfläche kann $N_p$ und $N_T$ vermindert werden, so dass $N_P$ dann der Restzahl der innerhalb der Kontur druckbaren Punkte entspricht. Die Verarbeitung aller Teilflächen einer Kontur ist also beendet, wenn $N_p = N_T$ ist.

Fig. 3 zeigt eine beispielhafte Kontur 301, die 860 druckbare Punkte, d. h. aufzeichnungsseitige Rasterelemente enthält. Die gewählte Darstellungsform soll einen Eindruck des zu erwartenden Druckbildes vermitteln und gleichzeitig die Verarbeitung für die einzelnen Teilflächen transparent und nachvollziehbar skizzieren.

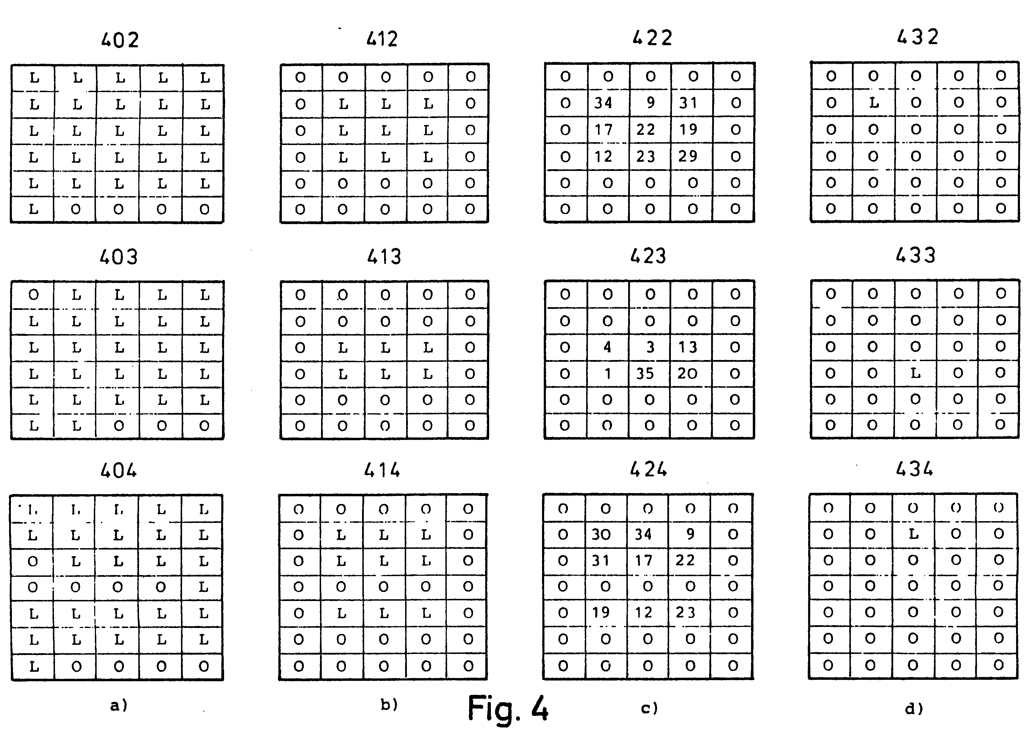

Die grösste Ausdehnung der gewählten Kontur ist in x-Richtung 44 Rasterelemente, in y-Richtung 30 Rasterelemente, so dass das Ausgangssignal $F_1$ des Konturenfilters 104 (Fig. 1) z. B. eine binäre Matrix (44 × 30) sein könnte, in welcher die innerhalb der Kontur liegenden Elemente mit L und die ausserhalb liegenden mit 0 gekennzeichnet wären. Der Flächendeckungsgrad $H_1$ (Fig. 1) sei 3,85%, so dass alle in der Beschreibung zu den Fig. 2a und 2b beispielhaft berechneten Werte übernommen werden können. Die Kontur wird also zunächst entsprechend der berechneten Streifenbreite (B = 5 Rasterelemente) und der berechneten Teilflächengrösse (z. B. $N_{T1}$ = 26 Rasterelemente) aufgeteilt, so dass annähernd quadratische Teilflächen, z. B. 302, 303 entstehen, solange nicht der Rand der Gesamtfläche diese Form stört. Die am Rand der Kontur liegenden Teilflächen, z. B. 304, sind häufig aus 2 Teilstücken, z. B. 304a und 304b, zusammengesetzt. Dies ist in Fig. 3a gesondert dargestellt. Die Länge einer solchen Teilfläche ist dadurch von der Kontur abhängig, dass die ihr zugeordnete Teilmatrix z. B. 26 innerhalb der Kontur liegende Rasterelemente enthält. Die Bearbeitung einzelner Teilflächen wird anhand von Fig. 4 noch ausführlich beschrieben, wo auch die Berechnung der Positionen der druckenden Punkte erklärt ist. Die druckenden Punkte sind an den für sie berechneten Positionen eingetragen. Man kann sehen, dass zur Berechnung ihrer Positionen eine Randpunktunterdrückung innerhalb der Teilflächen benutzt wurde, um eine sonst mögliche Anhäufung an den Kanten und Ecken der Teilflächen auszuschliessen. Eine für die Kontur geltende Randpunktunterdrückung ist zwar grundsätzlich möglich, hier jedoch nicht aufgeführt, so dass auch am Rand der Kontur druckende Punkte zu finden sind.

Fig. 4 zeigt die Berechnung der Positionen der druckenden Punkte für die beispielhaften Teilflächen 302, 303 und 304 aus Fig. 3 in den einzelnen Verarbeitungsschritten gemäss Fig. 2.

Im ersten Schritt a) sind die binären Matrizen 402, 403 und 404 dargestellt, die entstanden sind, indem die Daten der hier nicht dargestellten Konturmatrix stückweise entsprechend jeder Teilfläche übernommen wurden, wobei die Spaltenzahl 5 mit der Streifenbreite B identisch ist, und die Zeilenzahl sich nach der Anzahl der innerhalb der Kontur liegenden Elemente jeder Teilfläche richtet, wobei die ausserhalb der Teilfläche liegenden Elemente ebenso behandelt werden wie die ausserhalb der Kontur liegenden, d. h. sie werden 0 gesetzt. Diese binären Matrizen enthalten also genau so viele L wie die entsprechende Teilfläche Elemente hat, z. B. 26 für die erste Teilfläche.

Im zweiten Schritt b) werden z. B. die Randpunkte der binären Teilflächenmatrizen unterdrückt, d. h. auf 0 gesetzt, z. B. die erste Spalte, ebenso die erste und letzte Zeile sowie die zweite Zeile, falls die erste nicht vollständig besetzt war (d. h. weniger als 5 Elemente mit L hat), bzw. die vorletzte Zeile, falls die letzte nicht vollständig war. Dadurch entsteht aus der binären Teilflächenmatrix 402 die binäre Teilflächenmatrix 412, die dann durch die Rasterpunktunterdrückung weniger Elemente mit L aufweist, z. B. noch 9 statt vorher 16. Man könnte auch z. B. die Randpunkte der gesamten Kontur unterdrücken, indem zunächst alle einer 0 benachbarten Elemente 0 gesetzt werden und anschliessend die erste und letzte Zeile und Spalte 0 gesetzt werden, soweit dies nicht bereits geschehen ist.

Im dritten Schritt c) werden die Elemente, die ein L haben, mit einer Zufallszahl überschrieben. Die Zufallszahlen sind in diesem Beispiel dem folgenden Zufallszahlenvektor, der 37 verschiedene Zahlenwerte enthält und zyklisch durchlaufen wurde, entnommen: 34; 9; 31; 17; 22; 19; 12; 23; 29; 4; 3; 13; 1; 35; 20; 11; 28; 6; 36; 2; 14; 27; 16; 21; 7; 18; 33; 25; 5; 15; 37; 8; 24; 26; 10; 32; 30.

Die erste Teilflächenmatrix 412 enthält nach dem zweiten Verarbeitungsschritt der Randpunktunterdrückung noch 9 Elemente mit L und wird an diesen Stellen mit den ersten 9 Elementen des Zufallszahlenvektors überschrieben, wodurch eine Zufallsmatrix 422 entsteht. Die zweite Teilflächenmatrix 413 enthält die nachfolgenden 6 Elemente des Zufallszahlenvektors. Die folgenden drei Teilflächenmatrizen enthalten, wie man anhand von Fig. 3 leicht nachvollziehen kann, wiederum 6, 6 und 9 Zufallszahlen, so dass in der sechsten Teilflächenmatrix 424 der Zufallszahlenvektor nach dem ersten Element einmal durchlaufen ist und die Zahlen wieder von vorn eingelesen werden. Wie bereits erwähnt wurde, können auch Zufallszahlen eingelesen werden, die z. B. mit einem Rauschgenerator gewonnen werden können, die also wirklich zufällig sind.

Im vierten Schritt d) wird ein Element jeder Teilflächenmatrix ausgewählt und mit einem L markiert, z. B. das mit dem höchsten Zahlenwert (falls die gleiche Zufallszahl in einer Teilflächenmatrix nicht zweimal auftreten kann). Diese Matrix, z. B. 432, die also nur 1 L enthält, muss noch invertiert werden, falls H $\geq$ 50% ist, so dass sie nur eine 0 enthält. Dadurch ist die Position des einen druckenden bzw. des einen nicht druckenden Punktes (falls H $\geq$ 50% ist) festgelegt, indem allen druckenden Punkten ein L und allen nicht druckenden Punkten eine 0 zugeordnet ist. Die einzelnen Teilflächenmatrizen werden anschliessend in eine binäre Matrix übertragen und zusammengestellt, die der Konturmatrix entspricht. Diese ist hier wiederum nicht dargestellt.

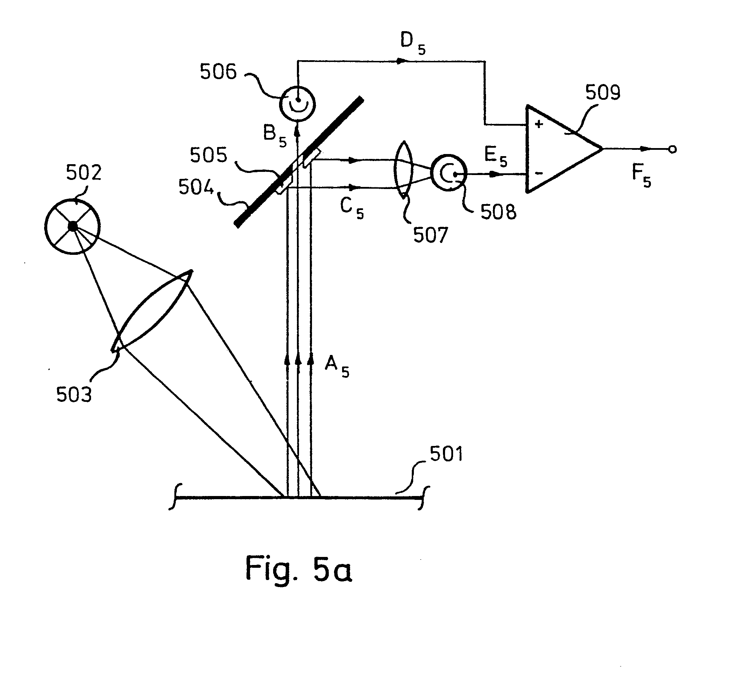

Fig. 5a zeigt ein bekanntes Prinzipschaltbild (siehe z. B. DE-B Nr. 1039842) zur Ermittlung von Konturlinien, wobei gleichzeitig ein Punkt und dessen Umfeld abgetastet werden. Die Originalvorlage 501 wird von einer Lichtquelle 502 mittels einer geeigneten optischen Einrichtung 503, die z. B. eine Linse oder ein Linsensystem oder ein Lichtleiter sein kann, beleuchtet. Das von der Vorlage remittierte Licht $A_5$ wird mittels einer optischen Einrichtung 504, welche zum Teil verspiegelt 505 ist und eine Bohrung enthält, aufgeteilt, so dass das vom Abtastpunkt remittierte Licht $B_5$ einem optoelektrischen Wandler 506 und das vom Umfeld des Abtastpunktes remittierte Licht $C_5$ gebündelt 507 und einem optoelektrischen Wandler 508 zugeführt wird. Dadurch entsteht ein elektrisches Signal $D_5$, welches dem vom Abtastpunkt remittierten Lciht proportional ist, und ein elektrisches Signal $E_5$, welches dem vom Umfeld des Abtastpunktes remittierten Licht proportional ist. Durch Vergleich der beiden elektrischen Signale erhält man eine Aussage darüber, ob der vom Abtastpunkt remittierte Lichtanteil sich von dem seines Umfeldes unterscheidet. Als Ausgangssignal $F_5$ des Differenzverstärkers 509 erhält man daher das Kontursignal.

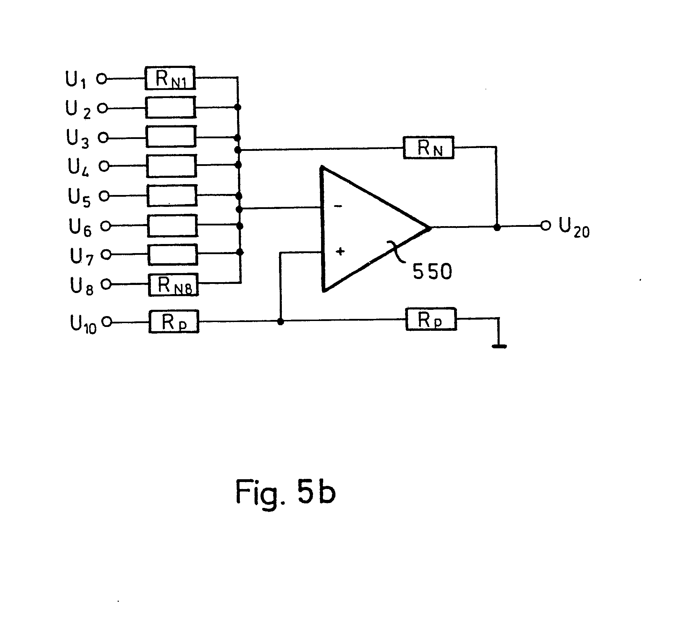

Fig. 5b zeigt ein bekanntes Prinzipschaltbild (siehe z. B. U. Tietze, Chr. Schenk, Halbleiterschaltungstechnik, Springer-Verlag, Berlin-Heidelberg-New York) zum Vergleich von Spannungssignalen. Dies kann man zur Erzeugung eines Kontursignals benutzen, indem man die Originalvorlage rasterartig abtastet, die von den Abtastpunkten reflektierten oder transmittierten Lichtsignale wie oben dargestellt, in optoelektrischen Wandlern in Spannungssignale umformt und sie einem Differenzverstärker 550 zuführt. Das dem Messpunkt zugeordnete Spannungssignal $U_{10}$ wird hierbei mit dem aus den Spannungssignalen $U_1...U_8$, die den benachbarten Abtastpunkten zugeordnet sind, erzeugten Signal verglichen, so dass das Ausgangssignal $U_{20}$ des Differenzverstärkers 550 das gewünschte Kontursignal ist. Wählt man z. B. die Widerstände so, dass $R_p = R_N$ und $R_{N1} = R_{N2} = ... R_{N8} = 8R_p$ ist, dann ist das Konturspannungssignal:

$$U_{20} = U_{10} - \frac{1}{8} \cdot \sum_{i=1}^{8} U_i$$

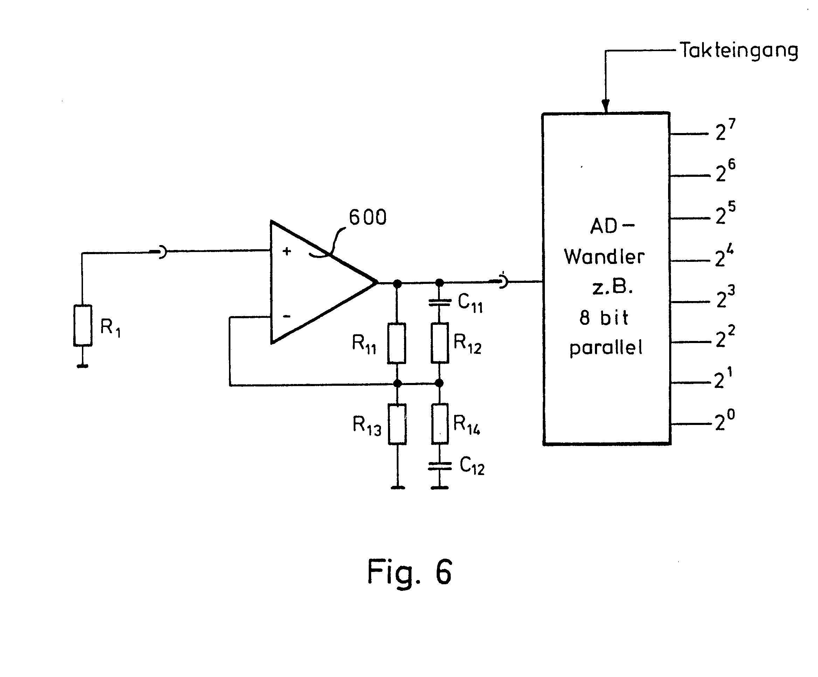

Fig. 6 zeigt eine Anordnung zur Erzeugung von Zufallszahlen, wobei die zufälligen Spannungswerte einer Rauschquelle, z. B. eines Widerstands $R_1$, verstärkt und in die digitale Form umgewandelt werden. Zu diesem Zweck kann man einen Differenzverstärker 600 in bekannter Weise als Bandpassverstärker beschalten, so dass die an seinem Ausgang liegenden Spannungswerte nicht durch Spannungen, die eventuell nicht zufällig sein könnten, z. B. Brummspannungen, gestört sind. Die Ausgangsspannungen des Differenzverstärkers können einem Analog-Digital-Wandler zugeführt werden, der das an seinem Einganganliegende analoge Spannungssignal in bekannter Weise z. B. in ein 8-bit-Digitalsignal umwandelt (Hersteller z. B. TRW, Typ TDC 1007 J), wobei die Umwandlung des momentanen analogen Spannungssignals nur erfolgt, wenn der Takteingang ein entsprechendes Signal erhält, und das Digitalsignal am Ausgang des A/D-Wandlers so lange gespeichert bleibt, bis ein weiteres Taktsignal die Berechnung des nächsten Digitalsignals auslöst. Der Takteingang kann so z. B. direkt von dem Druckmatrixrechner 110 in Fig. 1 angesteuert werden, indem ein neues Digitalsignal immer dann berechnet wird, wenn das entsprechende Element einer Teilflächenmatrix, z. B. der Teilflächenmatrix 412 in Fig. 4, den Wert L hat und mit einer Zufallszahl überschrieben werden soll.

**Patentansprüche**

1. Verfahren zur Herstellung von Druckformen mittels unregelmässig verteilter Druckpunkte, bei dem ein Bildoriginal bzw. ein entsprechend der Rechnerkapazität verarbeitbarer Ausschnitt des Originalbildes mit der gewünschten Detailauflösung in einzelnen Flächenelementen optoelektronisch abgetastet wird, wobei jedem Flächenelement ein dem Abtastsignal entsprechender Tonwert zugeordnet wird und Flächenelemente gleichen oder etwa gleichen Tonwertes zu Teilflächen zusammengefasst werden und die einzelnen Teilflächen ihrem Tonwert entsprechend durch eine Anzahl statistisch verteilter Druckpunkte, deren gesamte Flächenbedeckung innerhalb der Teilfläche dem Tonwert der Teilfläche entspricht, wiedergegeben werden, dadurch gekennzeichnet, dass ein Konturensignal erzeugt wird, aufgrund dessen die Zusammenfassung der Teilflächen entsprechend den tatsächlichen Grenzen gleichen oder etwa gleichen Tonwertes innerhalb des Originalbildes bzw. eines entsprechend der Rechnerkapazität verarbeitbaren Ausschnitts des Originalbildes vorgenommen wird.

2. Verfahren nach Anspruch 1, dadurch gekennzeichnet, dass die Ermittlung der Flächen gleichen oder etwa gleichen Tonwertes durch eine messtechnische Konturenerkennung vorgenommen wird.

3. Verfahren nach Anspruch 2, dadurch gekennzeichnet, dass die Konturenerkennung durch Vergleich der Dichtewerte (Tonwerte) der Abtastsignale der einzelnen Flächenelemente vorgenommen wird, indem bei gleichem oder etwa gleichem Tonwert die Flächenelemente zu Teilflächen zusammengefasst werden.

4. Verfahren nach Anspruch 2, dadurch gekennzeichnet, dass die Zusammenfassung der Flächenelemente mittels eines Konturensignals vorgenommen wird, indem alle Flächenelemente, die in Abtastrichtung innerhalb zweier Konturlinien liegen und etwa gleiche Dichtewerte haben, zusammengefasst werden.

5. Verfahren nach Anspruch 1, dadurch gekennzeichnet, dass bei der Wiederaufzeichnung der Teilflächen an den Rändern der Teilflächen gegebenenfalls einzelne Elemente einer Teilfläche unterdrückt werden.

**Claims**

1. Method of producing printing blocks by means of irregularly spaced dots, wherein an image original, or a processible section of the original image, according to the computer capacity, is scanned optoelectronically in separate areal elements with a required detail resolution, each areal element having allocated to it a tonal value commensurate with the scanning signal and areal elements of identical or approximately identical tonal value being combined into part areas and the separate part areas being reproduced in accordance with their tonal value by a number of statistically distributed dots whose total areal coverage within the part area corresponds to the tonal value of the part area, characterized in that a contour signal is generated on the basis which the combination of the part areas is carried out in accordance with the actual limits of identical or approximately identical tonal value within the original image or within a processible section of the original image, according to the computer capacity.

2. Method according to Claim 1, characterized in that the determination of areas of identical or approximately identical tonal value is carried out by a contour detection operation based on mensuration technology.

3. Method according to Claim 2, characterized in that the contour detection is carried out by comparison of the density values (tonal values) of the scanning signals of the individual areal elements, the areal elements being combined into part areas in case of identical or approximately identical tonal value.

4. Method according to Claim 2, characterized in that the combination of the areal elements is carried out by means of a contour signal, by combining all the areal elements which lie within two contour lines in the scanning direction and have approximately identical density values.

5. Method according to Claim 1, characterized in that individual elements of a part area are suppressed if appropriate at the edge of the part areas upon re-recording the part areas.

**Revendications**

1. Procédé pour réaliser des matrices d'impression à l'aide de points d'impression répartis de façon irrégulière, selon lequel on détecte l'original de l'image ou un extrait de l'original de l'image à traiter en fonction de la capacité de calcul, suivant une résolution souhaitée des détails en des éléments de surface, distincts, par voie opto-électronique, une valeur de teinte correspondant au signal de détection étant associée à chaque élément de surface, et les éléments de surface ayant la même valeur de teinte ou une valeur sensiblement égale étant réunis en des surfaces partielles et les différentes surfaces partielles étant restituées en fonction de la valeur de leur teinte par un nombre de ponts d'impression répartis de façon statistique et dont la couverture totale de la surface correspond à l'intérieur des surfaces partielles à la valeur de la teinte des surfaces partielles, caractérisé en ce qu'on génère un signal de contour et en fonction de celui-ci on regroupe les surfaces partielles en fonction des limites effectives des valeurs de teinte égales ou sensiblement égales à l'intérieur de l'original de l'image ou de l'extrait de l'original de l'image à traiter, correspondant à la capacité de calcul.

2. Procédé selon la revendication 1, caractérisé en ce qu'on détermine les surfaces de valeurs de teinte égales ou sensiblement égales par une reconnaissance des contours faite suivant une technique de mesure.

3. Procédé selon la revendication 2, caractérisé en ce que la détection des contours se fait par comparaison des valeurs de densité (valeurs de teinte) des signaux de détection des différents éléments de surface en réunissant en des surfaces partielles les éléments de surface ayant une valeur de teinte égale ou sensiblement égale.

4. Procédé selon la revendication 2, caractérisé en ce que la réunion des éléments de surface est faite à l'aide d'un signal de contour, en réunissant tous les éléments de surface qui, dans la direction de détection, se trouvent à l'intérieur de deux lignes de contour et ont des valeurs de densité sensiblement égales.

5. Procédé selon la revendication 1, caractérisé en ce que, lors de la reproduction des surfaces partielles, on supprime le cas échéant des éléments isolés d'une surface partielle aux bords des surfaces partielles.

Fig. 1

Fig. 2a

St 2

Fig. 2b

Bu 1

ist $B \geq B_G$ ?

ja → Randpunktunterdrückung

nein → Vollbesetzung der Teilmatrix

Schwellenbreite zur Randpunktunterdrückung $B_G$

Zufallszahlenfolge

Kennzeichnung eines Elements

ist $\varphi \leq 0{,}5$ ?

nein → Inversion der Kennzeichnung

ja → Teildruckmatrix

Gesamtdruckmatrix der bearbeiteten Kontur

ist $N_P - N_T = 0$ ?

ja → Bearbeitung der nächsten Kontur

nein

Fig. 3

Fig. 3a

## Fig. 4

**402**

| L | L | L | L | L |
|---|---|---|---|---|
| L | L | L | L | L |
| L | L | L | L | L |
| L | L | L | L | L |
| L | L | L | L | L |
| L | O | O | O | O |

**412**

| O | O | O | O | O |
|---|---|---|---|---|
| O | L | L | L | O |
| O | L | L | L | O |
| O | L | L | L | O |
| O | O | O | O | O |
| O | O | O | O | O |

**422**

| O | O | O | O | O |
|---|---|---|---|---|
| O | 34 | 9 | 31 | O |
| O | 17 | 22 | 19 | O |
| O | 12 | 23 | 29 | O |
| O | O | O | O | O |
| O | O | O | O | O |

**432**

| O | O | O | O | O |
|---|---|---|---|---|
| O | L | O | O | O |
| O | O | O | O | O |
| O | O | O | O | O |
| O | O | O | O | O |
| O | O | O | O | O |

**403**

| O | L | L | L | L |
|---|---|---|---|---|
| L | L | L | L | L |
| L | L | L | L | L |
| L | L | L | L | L |
| L | L | L | L | L |
| L | L | O | O | O |

**413**

| O | O | O | O | O |
|---|---|---|---|---|
| O | O | O | O | O |
| O | L | L | L | O |
| O | L | L | L | O |
| O | O | O | O | O |
| O | O | O | O | O |

**423**

| O | O | O | O | O |
|---|---|---|---|---|
| O | O | O | O | O |
| O | 4 | 3 | 13 | O |
| O | 1 | 35 | 20 | O |
| O | O | O | O | O |
| O | O | O | O | O |

**433**

| O | O | O | O | O |
|---|---|---|---|---|
| O | O | O | O | O |
| O | O | O | O | O |
| O | O | L | O | O |
| O | O | O | O | O |
| O | O | O | O | O |

**404**

| L | L | L | L | L |
|---|---|---|---|---|
| L | L | L | L | L |
| O | L | L | L | L |
| O | O | O | O | L |
| L | L | L | L | L |
| L | L | L | L | L |
| L | O | O | O | O |

**414**

| O | O | O | O | O |
|---|---|---|---|---|
| O | L | L | L | O |
| O | L | L | L | O |
| O | O | O | O | O |
| O | L | L | L | O |
| O | O | O | O | O |
| O | O | O | O | O |

**424**

| O | O | O | O | O |
|---|---|---|---|---|
| O | 30 | 34 | 9 | O |
| O | 31 | 17 | 22 | O |
| O | O | O | O | O |
| O | 19 | 12 | 23 | O |
| O | O | O | O | O |
| O | O | O | O | O |

**434**

| O | O | O | O | O |
|---|---|---|---|---|
| O | O | L | O | O |
| O | O | O | O | O |
| O | O | O | O | O |
| O | O | O | O | O |
| O | O | O | O | O |
| O | O | O | O | O |

a)　　　　b)　Fig. 4　c)　　　　d)

0074 422

Fig. 5a

Fig. 5b

Fig. 6

AD-
Wandler
z.B.
8 bit
parallel

Takteingang

$2^7$
$2^6$
$2^5$
$2^4$
$2^3$
$2^2$
$2^1$
$2^0$

$R_1$

600

$R_{11}$  $C_{11}$  $R_{12}$

$R_{13}$  $R_{14}$  $C_{12}$

23

0 074 422